# EUROPEAN PATENT SPECIFICATION

(11) **EP 3 778 839 B1**
(45) Date of publication and mention of the grant of the patent: **04.08.2021**
(21) Application number: 19191368.0
(22) Date of filing: 13.08.2019
(51) Int. Cl.: C10M 145/14

(54) **VISCOSITY INDEX IMPROVER WITH IMPROVED SHEAR-RESISTANCE**
VISKOSITÄTSINDEXVERBESSERER MIT VERBESSERTER SCHERBESTÄNDIGKEIT
AGENT AMÉLIORANT L'INDICE DE VISCOSITÉ PRÉSENTANT UNE MEILLEURE RÉSISTANCE AU CISAILLEMENT

(43) Date of publication of application: 17.02.2021
(73) Proprietor: Evonik Operations GmbH, 45128 Essen (DE)
(72) Inventor: JÜSTEL, Rebecca, 60488 Frankfurt am Main (DE); JANSSEN, Dieter, 64823 Groß-Umstadt (DE)
(74) Representative: Evonik Patent Association

(56) References cited:
- EP-A1- 3 498 808
- WO-A1-2009/007147
- US-A1- 2019 203 148

## Description

### TECHNICAL FIELD OF THE INVENTION

The invention relates to a polyalkyl(meth)acrylate polymer comprising a polybutadiene-based monomer and preparation process thereof. The invention also relates to the use of said polymers as viscosity index improvers in lubricant formulation and to lubricant compositions comprising said polymer.

### BACKGROUND OF THE INVENTION

The stringent global government vehicle regulations regarding CO₂ emissions and fossil fuel consumption force the automotive industry to develop systems that deliver better fuel economy. One lever are hardware changes and the use of lightweight materials. Another lever is the use of lubricants with lower viscosity grades in the transmission or engine. This lever has some limitations as the viscosity has still to be high enough to protect the metal parts in the transmission or engine. Thus, it is important to adjust the viscosity to an optimum and try to keep it as constant as possible over the whole temperature range of the application.

Here, viscosity index improvers (VIIs) are used to improve the temperature-dependence of the lubricant that is usually illustrated by the viscosity index (VI). The VI is calculated from the kinematic viscosity at 40 °C (KV₄₀) and the kinematic viscosity at 100 °C (KV₁₀₀). The higher the VI the lower is the temperature-dependence of the viscosity of the lubricant, i.e. the viscosity is changing less over temperature.

Despite the VI, the shear-resistance of the lubricant is an important factor: on one side, the lifetimes of the lubricants are getting longer asking for more resistant lubricants and on the other side the lubricant viscosities are getting lower minimizing the possibility to reduce viscosity due to shear losses without causing any failures in the metal parts.

Polyalkyl(meth)acrylate (PAMA) polymers and especially PAMAs comprising a polybutadiene-based monomer are known to act as good viscosity index improvers in lubricants.

EP3498808A1 describes a polyalkyl(meth)acrylate comprising a combination of polybutadiene-based monomers with different molecular weights and the use of the polymer as a lubricant additive to improve the shear-resistance of the lubricant.

WO2007/003238, WO2009/007147 and WO2010/142789 disclose the use of polymers comprising polybutadiene-derived macromonomers as viscosity index improvers, wherein the macromonomers have a molecular weight of 500 to 50 000 g/mol.

WO2018/174188 discloses polymers comprising polybutadiene-derived macromonomers as viscosity index improvers.

WO2015/129732, JP6234974, JP2017031400, JP2017171899 disclose polymers comprising polybutadiene-derived macromonomers with different molecular weights as viscosity index improvers.

There is still a need to develop new viscosity index improvers which would not only have high viscosity index values but would also have a great shear-resistance in a lubricant formulation. Therefore, the aim of the present invention is to provide viscosity index improvers for use in lubricant compositions with improved shear-resistance as compared to the viscosity index improvers known from the prior art, while maintaining high viscosity index values.

### SUMMARY OF THE INVENTION

It was surprisingly found that the polyalkyl(meth)acrylate polymer as defined in claim 1 solves the above technical problem as it gives a combination of good shear-stability and high viscosity index in lubricant formulations. The invention is based on the finding that the use of a high amount of methyl(meth)acrylate in combination with a certain amount of butyl(meth)acrylate and a hydrogenated polybutadiene with a molecular weight between 1,800 g/mol and 2,200 g/mol in polyalkyl(meth)acrylates leads to an excellent shear-stability and a high viscosity index of the resulting polymers.

Therefore, in a first aspect, the present invention relates to the polyalkyl(meth)acrylate polymer as defined in claim 1.

In another aspect, the present invention relates to the method for manufacturing said polyalkyl(meth)acrylate polymer.

In a third aspect, the present invention relates to the use of the polyalkyl(meth)acrylate polymer according to the invention as an additive for a lubricant composition for improving the viscosity index and the shear-resistance of the lubricant composition.

In a fourth aspect, the present invention relates to a composition comprising one or more base oil and the polyalkyl(meth)acrylate as defined in the present invention.

### DETAILED DESCRIPTION OF THE INVENTION

### Polymers of the invention

In a first aspect, the invention relates to a polyalkyl(meth)acrylate polymer, obtainable by polymerizing a monomer composition comprising:
a) 15 to 35 % by weight of one or more esters of (meth)acrylic acid and one hydroxylated hydrogenated polybutadiene having a number-average molecular weight of 1,800 to 2,200 g/mol, based on the total weight of the monomer composition;
b) 50 to 60 % by weight of methyl(meth)acrylate and butyl(meth)acrylate, based on the total weight of the monomer composition; and
c) 5 to 35 % by weight of one or more linear or branched C₇-C₃₀ alkyl(meth)acrylates, based on the total weight of the monomer composition;
wherein the weight ratio of methyl(meth)acrylate to butyl(meth)acrylate is 5:1 to 3:1, and wherein the polyalkyl(meth)acrylate polymer has a weight-average molecular weight (M_{w}) of 50,000 to 250,000 g/mol.

Unless otherwise noted, the weight amounts of the monomers are given relative to the total amount of monomers used, namely, the total weight of the monomer composition.

Preferably, the amounts of monomers a) to c) add up to 100 % by weight.

A polymer in the context of this invention comprises a first polymer, which is also referred to as backbone or main chain, and a multitude of further polymers which are referred to as side chains and are bonded covalently to the backbone. In the present case, the backbone of the polymer is formed by the interlinked unsaturated groups of the mentioned (meth)acrylic acid esters. The alkyl groups and the hydrogenated polybutadiene chains of the (meth)acrylic esters form the side chains of the polymer. The reaction product of one or more ester of (meth)acrylic acid and one hydroxylated hydrogenated polybutadiene (monomer a)) is also referred in the present invention as macromonomer.

The term "(meth)acrylic acid" refers to acrylic acid, methacrylic acid and mixtures of acrylic acid and methacrylic acid; methacrylic acid being preferred. The term "(meth)acrylate" refers to esters of acrylic acid, esters of methacrylic acid or mixtures of esters of acrylic acid and methacrylic acid; esters of methacrylic acid being preferred.

Polymers of different weight-average molecular weight may be used for different applications, for example as additives for engine oils, transmission fluids and traction oils. The weight-average molecular weight of the polymers may preferably be selected depending on the intended application according to the following Table 1:

**Table1 :**

| Application | preferably M_{w} (g/mol) | more preferably M_{w} (g/mol) | most preferably M_{w} (g/mol) |
|---|---|---|---|
| Engine oil | 150,000 to 1,000,000 | 230,000 to 1,000,000 | 300,000 to 800,000 |
| Transmission fluid | 15,000 to 350,000 | 30,000 to 350,000 | 40,000 to 200,000 |
| Traction oil | 10,000 to 600,000 | 12,000 to 230,000 | 15,000 to 150,000 |

The weight-average molecular weight (M_{w}) of the polymers according to the invention is in the range of 50,000 to 250,000 g/mol, preferably 60,000 to 220,000 g/mol. Polymers having this weight-average molecular weight are especially suited for use in transmission fluids, such as automatic transmission fluids, manual transmission fluids and belt-continuously variable transmission fluids.

Preferably, the polydispersity index (PDI) of the polymers according to the invention is in the range of 1.5 to 4.5, more preferably 2 to 4.5, most preferably 2.7 to 4.5. The polydispersity index is defined as the ratio of weight-average molecular weight to number-average molecular weight (Mw/Mn).

The weight-average and number-average molecular weights are determined by size exclusion chromatography (SEC) using commercially available polymethylmethacrylate standards. The determination is effected according to DIN 55672-1 by size exclusion chromatography with THF as eluent (flow rate: 1mL/min; injected volume: 100 µL).

The polymer according to the invention can be characterized on the basis of its molar degree of branching ("f-branch"). The molar degree of branching refers to the percentage in mol% of macromonomer (monomer a)) used, based on the total molar amount of all the monomers in the monomer composition. The molar amount of the macromonomer used is calculated on the basis of the number-average molecular weight Mₙ of the macromonomer. The calculation of the molar degree of branching is described in detail in WO 2007/003238 A1, especially on pages 13 and 14, to which reference is made here explicitly.

Preferably, the polymers have a molar degree of branching f_{branch} of 0.1 to 5 mol%, more preferably 1.5 to 4 mol% and most preferably 1.5 to 2.5 mol%.

### Hydroxylated hydrogenated polybutadienes - Monomer a)

The hydroxylated hydrogenated polybutadienes for use in accordance with the invention (monomer a)) have a number-average molecular weight Mₙ of 1,800 to less than 2,200 g/mol. Because of their high molecular weight, the hydroxylated hydrogenated polybutadienes can also be referred to as macroalcohols in the context of this invention. The corresponding esters of (meth)acrylic acid can also be referred to as macromonomers in the context of this invention.

The number-average molecular weight Mₙ is determined by SEC using commercially available polybutadiene standards. The determination is affected according to DIN 55672-1 by size exclusion chromatography with THF as eluent (flow rate: 1mL/min; injected volume: 100 µL).

Preferably, the monomer composition comprises as monomer a) 15 to 35 % by weight, more preferably 15 to 30 % by weight of one or more esters of (meth)acrylic acid and the hydroxylated hydrogenated polybutadiene, based on the total weight of the monomer composition.

Preferably, the hydroxylated hydrogenated polybutadienes have a hydrogenation level of at least 99%. An alternative measure of the hydrogenation level which can be determined on the polymer of the invention is the iodine number. The iodine number refers to the number of grams of iodine which can be added onto 100 g of polymer. Preferably, the polymer of the invention has an iodine number of not more than 5 g of iodine per 100 g of polymer. The iodine number is determined by the Wijs method according to DIN 53241-1:1995-05.

Preferred hydroxylated hydrogenated polybutadienes can be obtained according to GB 2270317.

As used herein, the term "hydroxylated hydrogenated polybutadiene" refers to a hydrogenated polybutadiene that comprises one or more hydroxyl groups. The hydroxylated hydrogenated polybutadiene may further comprise additional structural units, such as polyether groups derived from the addition of alkylene oxides to a polybutadiene or a maleic anhydride group derived from the addition of maleic anhydride to a polybutadiene. These additional structural units may be introduced into the polybutadiene when the polybutadiene is functionalized with hydroxyl groups.

Preference is given to monohydroxylated hydrogenated polybutadienes. More preferably, the hydroxylated hydrogenated polybutadiene is a hydroxyethyl- or hydroxypropyl-terminated hydrogenated polybutadiene. Particular preference is given to hydroxypropyl-terminated polybutadienes.

These monohydroxylated hydrogenated polybutadienes can be prepared by first converting butadiene monomers by anionic polymerization to polybutadiene. Subsequently, by reaction of the polybutadiene monomers with an alkylene oxide, such as ethylene oxide or propylene oxide, a hydroxy-functionalized polybutadiene can be prepared. The polybutadiene may also be reacted with more than one alkylene oxide units, resulting in a polyether-polybutadiene block copolymer having a terminal hydroxyl group. The hydroxylated polybutadiene can be hydrogenated in the presence of a suitable transition metal catalyst.

These monohydroxylated hydrogenated polybutadienes can also be selected from products obtained by hydroboration of (co)polymers of having a terminal double bond (e.g. as described in US Patent No. 4,316,973); maleic anhydride-ene-amino alcohol adducts obtained by an ene reaction between a (co)polymer having a terminal double bond and maleic anhydride with an amino alcohol; and products obtained by hydroformylation of a (co)polymer having a terminal double bond, followed by hydrogenation (e.g. as described in JP Publication No. S63-175096).

The macromonomers a) for use in accordance with the invention can be prepared by transesterification of alkyl(meth)acrylates. Reaction of the alkyl(meth)acrylate with the hydroxylated hydrogenated polybutadiene forms the ester of the invention. Preference is given to using methyl(meth)acrylate or ethyl(meth)acrylate as reactant.

This transesterification is widely known. For example, it is possible for this purpose to use a heterogeneous catalyst system, such as lithium hydroxide/calcium oxide mixture (LiOH/CaO), pure lithium hydroxide (LiOH), lithium methoxide (LiOMe) or sodium methoxide (NaOMe) or a homogeneous catalyst system such as isopropyl titanate (Ti(OiPr)₄) or dioctyltin oxide (Sn(OCt)₂O). The reaction is an equilibrium reaction. Therefore, the low molecular weight alcohol released is typically removed, for example by distillation.

In addition, the macromonomers can be obtained by a direct esterification proceeding, for example, from (meth)acrylic acid or (meth)acrylic anhydride, preferably under acidic catalysis by p-toluenesulfonic acid or methanesulfonic acid, or from free methacrylic acid by the DCC method (dicyclohexylcarbodiimide).

Furthermore, the present hydroxylated hydrogenated polybutadiene can be converted to an ester by reaction with an acid chloride such as (meth)acryloyl chloride.

Preferably, in the above-detailed preparations of the esters of the invention, polymerization inhibitors are used, for example the 4-hydroxy-2,2,6,6-tetramethylpiperidinooxyl radical and/or hydroquinone monomethyl ether.

### Alkvl(meth)acrvlates - Monomers b) and c)

The monomer composition comprises, as monomer b), 50 to 60 % by weight, more preferably 50 to 55 % by weight of methyl(meth)acrylate and butyl(meth)acrylate, based on the total weight of the monomer composition, wherein the weight ratio of methyl(meth)acrylate to butyl(meth)acrylate is from 5:1 to 3:1.

Regarding monomer c), the term "C₇₋₃₀ alkyl(meth)acrylates" refers to esters of (meth)acrylic acid and linear or branched alcohols having 7 to 30 carbon atoms. The term encompasses individual (meth)acrylic esters with an alcohol of a particular length, and likewise mixtures of (meth)acrylic esters with alcohols of different lengths.

Suitable C₇₋₃₀ alkyl(meth)acrylates include, for example, 2-butyloctyl(meth)acrylate, 2-hexyloctyl(meth)acrylate, decyl(meth)acrylate, 2-butyldecyl(meth)acrylate, 2-hexyldecyl(meth)acrylate, 2-octyldecyl(meth)acrylate, undecyl(meth)acrylate, 5-methylundecyl(meth)acrylate, dodecyl(meth)acrylate, 2-methyldodecyl(meth)acrylate, 2-hexyldodecyl(meth)acrylate, 2-octyldodecyl (meth)acrylate, tridecyl(meth)acrylate, 5-methyltridecyl(meth)acrylate, tetradecyl(meth)acrylate, 2-decyltetradecyl(meth)acrylate, pentadecyl(meth)acrylate, hexadecyl(meth)acrylate, 2-methylhexadecyl(meth)acrylate, 2-dodecylhexadecyl(meth)acrylate, heptadecyl(meth)acrylate, 5-isopropylheptadecyl(meth)acrylate, 4-*tert-*butyloctadecyl(meth)acrylate, 5-ethyloctadecyl(meth)acrylate, 3-isopropyloctadecyl(meth)acrylate, octadecyl(meth)acrylate, 2-decyloctadecyl(meth)acrylate, 2-tetradecyloctadecyl(meth)acrylate, nonadecyl(meth)acrylate, eicosyl(meth)acrylate, cetyleicosyl(meth)acrylate, stearyleicosyl(meth)acrylate, docosyl(meth)acrylate, eicosyltetratriacontyl(meth)acrylate, 2-decyl-tetradecyl(meth)acrylate, 2-decyloctadecyl(meth)acrylate, 2-dodecyl-1-hexadecyl(meth)acrylate, 1,2-octyl-1-dodecyl(meth)acrylate, 2-tetradecylocadecyl(meth)acrylate, 1,2-tetradecyl-octadecyl(meth)acrylate and 2-hexadecyl-eicosyl(meth)acrylate, n-tetracosyl(meth)acrylate, n-triacontyl(meth)acrylate and/or n-hexatriacontyl(meth)acrylate.

The term "C₁₂₋₁₄ alkyl(meth)acrylates" refers to esters of (meth)acrylic acid and linear or branched alcohols having 12 to 14 carbon atoms. The term encompasses individual (meth)acrylic esters with an alcohol of a particular length, and likewise mixtures of (meth)acrylic esters with alcohols of different lengths.

The suitable C₁₂₋₁₄ alkyl(meth)acrylates include, for example, dodecyl methacrylate, 2-methyldodecyl methacrylate, tridecyl methacrylate, 5-methyltridecyl methacrylate and/or tetradecyl methacrylate.

Particularly preferred monomers c) are (meth)acrylic esters of a linear C₁₂₋₁₄ alcohol mixture (C₁₂₋₁₄ alkyl methacrylate).

The monomer composition preferably comprises, as monomer c), 5 to 35 % by weight of one or more C₇₋₃₀ alkyl(meth)acrylates, preferably 15 to 35 % by weight of one or more C₇₋₃₀ alkyl(meth)acrylates, more preferably 20 to 30 % by weight of one or more C₇₋₃₀ alkyl(meth)acrylates, based on the total weight of the monomer composition.

In one embodiment, the monomer composition comprises as monomer c) preferably 5 to 35 % by weight, more preferably 15 to 35% by weight, even more preferably 20 to 30% by weight of one or more C₁₂₋₁₄ alkyl(meth)acrylates, based on the total weight of the monomer composition.

### Additional monomers - monomer d)

Preferably, the monomer composition comprises additional monomers d) in addition to the monomers a) to c).

Additional monomers which can be used in accordance with the invention are selected from the group consisting of styrene monomers having from 8 to 17 carbon atoms, vinyl esters having from 1 to 11 carbon atoms in the acyl group, vinyl ethers having from 1 to 10 carbon atoms in the alcohol group, dispersing oxygen- and/or nitrogen-functionalized monomers, heterocyclic (meth)acrylates, heterocyclic vinyl compounds, monomers containing a covalently bonded phosphorous atom, monomers containing epoxy groups and monomers containing halogens.

Suitable styrene monomers having from 8 to 17 carbon atoms are selected from the group consisting of styrene, substituted styrenes having an alkyl substituent in the side chain, for example *alpha-*methylstyrene and *alpha*-ethylstyrene, substituted styrenes having an alkyl substituent on the ring, such as vinyltoluene and *para*-methylstyrene, halogenated styrenes, for example monochlorostyrenes, dichlorostyrenes, tribromostyrenes and tetrabromostyrenes, nitrostyrene; styrene being preferred.

Suitable vinyl esters having from 1 to 11 carbon atoms in the acyl group are selected from the group consisting of vinyl formate, vinyl acetate, vinyl propionate, vinyl butyrate; preferably vinyl esters including from 2 to 9, more preferably from 2 to 5 carbon atoms in the acyl group, wherein the acyl group may be linear or branched.

Suitable vinyl ethers having from 1 to 10 carbon atoms in the alcohol group are selected from the group consisting of vinyl methyl ether, vinyl ethyl ether, vinyl propyl ether, vinyl butyl ether; preferably vinyl ethers including from 1 to 8, more preferably from 1 to 4 carbon atoms in the alcohol group, wherein the alcohol group may be linear or branched.

Suitable monomers which are derived from dispersing oxygen- and/or nitrogen-functionalized monomers are selected from the group consisting of aminoalkyl(meth)acrylates, such as N,N-dimethylaminoethyl(meth)acrylate, N,N-dimethylaminopropyl(meth)acrylate, N,N-diethylaminopentyl(meth)acrylate, N,N-dibutylaminohexadecyl(meth)acrylate; aminoalkyl(meth)acrylamides, such as N,N-dimethylaminopropyl(meth)acrylamide; hydroxyalkyl(meth)acrylates, such as 3-hydroxypropyl(meth)acrylate, 3,4-dihydroxybutyl(meth)acrylate, 2-hydroxyethyl(meth)acrylate, 2-hydroxypropyl(meth)acrylate, 2,5-dimethyl-1,6-hexanediol(meth)acrylate, 1,10-decanediol(meth)acrylate, p-hydroxystyrene, vinyl alcohol, alkenols ((methyl)allyl alcohol having 3 to 12 carbon atoms), multivalent (3-8 valent) alcohol (glycerol, pentaerythritol, sorbitol, sorbitan, doglycerides, sugars) ether or meth(acrylate); C₁₋₈-alkyloxy-C₂₋₄-alkyl(meth)acrylates, such as methoxypropyl(meth)acrylate, methoxybutyl (meth)acrylate, methoxyheptyl(meth)acrylate, methoxyhexyl(meth)acrylate, methoxypentyl(meth)acrylate, methoxyoctyl(meth)acrylate, ethoxyethyl(meth)acrylate, ethoxypropyl(meth)acrylate, ethoxybutyl(meth)acrylate, ethoxyheptyl(meth)acrylate, ethoxyhexyl(meth)acrylate, ethoxypentyl(meth)acrylate, ethoxyoctyl(meth)acrylate, propoxymethyl(meth)acrylate, propoxyethyl(meth)acrylate, propoxypropyl(meth)acrylate, propoxybutyl(meth)acrylate, propoxyheptyl(meth)acrylate, propoxyhexyl(meth)acrylate, propoxypentyl(meth)acrylate, propoxyoctyl(meth)acrylate, butoxymethyl(meth)acrylate, butoxyethyl(meth)acrylate, butoxypropyl(meth)acrylate, butoxybutyl(meth)acrylate, butoxyheptyl(meth)acrylate, butoxyhexyl(meth)acrylate, butoxypentyl(meth)acrylate and butoxyoctyl(meth)acrylate, ethoxyethyl(meth)acrylate and butoxyethyl(meth)acrylate are being preferred.

Suitable heterocyclic (meth)acrylates are selected form the group consisting of 2-(1-imidazolyl)ethyl(meth)acrylate, 2-(4-morpholinyl)ethyl(meth)acrylate, 1-(2-methacryloyloxyethyl)-2-pyrrolidone, N-methacryloylmorpholine, N-methacryloyl-2-pyrrolidinone, N-(2-methacryloyloxyethyl)-2-pyrrolidinone, N-(3-methacryloyloxypropyl)-2-pyrrolidinone.

Suitable heterocyclic vinyl compounds are selected from the group consisting of 2-vinylpyridine, 4-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, N-vinylpyrrolidine, 3-vinylpyrrolidine, N-vinyl-caprolactam, N-vinylbutyrolactam, vinyloxolane, vinylfuran, vinyloxazoles and hydrogenated vinyloxazoles.

Monomers containing a covalently bonded phosphorous atom are selected from the group consisting of 2-(dimethylphosphato)propyl(meth)acrylate, 2-(ethylenephosphito)propyl (meth)acrylate, dimethylphosphinomethyl(meth)acrylate, dimethylphosphonoethyl(meth)acrylate, diethyl(meth)acryloyl phosphonate, dipropyl(meth)acryloyl phosphate, 2 (dibutylphosphono)ethyl (meth)acrylate, diethylphosphatoethyl(meth)acrylate, 2-(dimethylphosphato)-3-hydroxypropyl (meth)acrylate, 2-(ethylenephosphito)-3-hydroxypropyl(meth)acrylate, 3-(meth)acryloyloxy-2-hydroxypropyl diethyl phosphonate, 3-(meth)acryloyloxy-2-hydroxypropyl dipropyl phosphonate, 3-(dimethylphosphato)-2-hydroxypropyl(meth)acrylate, 3-(ethylenephosphito)-2-hydroxypropyl(meth)acrylate, 2-(meth)acryloyloxy-3-hydroxypropyl diethyl phosphonate, 2-(meth)acryloyloxy-3-hydroxypropyl dipropyl phosphonate and 2-(dibutylphosphono)-3-hydroxypropyl(meth)acrylate.

Suitable monomers containing epoxy groups are, for example, glycidyl(meth)acrylate and glycidyl(meth)allyl ether and the like.

Suitable monomers containing halogens are, for example, vinyl chloride, vinyl bromide, vinylidene chloride, (meth)allyl chloride and halogenated styrene (dichlorostyrene) and the like.

Preferably, the monomer composition further comprises one or more monomer d) selected from the list consisting of (meth)acrylates of ether alcohols, aminoalkyl (meth)acrylates, aminoalkyl (meth)acrylamides, vinyl monomers containing aromatic groups.

In another preferred embodiment, the monomer composition comprises, as monomer d), 0.1% to 5% by weight of monomer d), preferably 0.1% to 2% by weight of additional monomers, based on the total weight of the monomer composition.

Preferably, the additional monomers d) are styrene monomers having from 8 to 17 carbon atoms.

In one embodiment, the monomer composition comprises as monomer d) 0.1 to 2 % by weight, of one or more styrene monomers having from 8 to 17 carbon atoms, based on the total weight of the monomer composition.

Preferably, the amounts of monomers a) to d) add up to 100 % by weight.

### Preferable monomer composition

In one embodiment, the monomer composition comprises
a) 15 to 30 % by weight of one or more esters of (meth)acrylic acid and one hydroxylated hydrogenated polybutadiene having a number-average molecular weight of 1,800 to 2,200 g/mol, based on the total weight of the monomer composition;
b) 50 to 55 % by weight of methyl(meth)acrylate and butyl(meth)acrylate, based on the total weight of the monomer composition;
c) 20 to 30 % by weight of one or more linear C₁₂-C₁₄ alkyl(meth)acrylates, based on the total weight of the monomer composition; and
d) 0.1% to 2% by weight of styrene monomers having from 8 to 17 carbon atoms, based on the total weight of the monomer composition;
wherein the weight contents of monomers a), b), c) and d) of the monomer composition sum up to 100 % by weight, based on the total weight of the monomer composition.

### Manufacturing method

The invention also relates to a method for manufacturing the above-mentioned polymers, the method comprising the steps of:
(x) providing a monomer composition as described above; and
(y) initiating radical polymerization in the monomer composition.

Standard free-radical polymerization is detailed, inter alia, in Ullmann's Encyclopedia of Industrial Chemistry, Sixth Edition. In general, a polymerization initiator and optionally a chain transfer agent are used for this purpose.

The ATRP method is known per se. It is assumed that this is a "living" free-radical polymerization, but no restriction is intended by the description of the mechanism. In these processes, a transition metal compound is reacted with a compound having a transferable atom group. This involves transfer of the transferable atom group to the transition metal compound, as a result of which the metal is oxidized. This reaction forms a free radical which adds onto ethylenic groups. However, the transfer of the atom group to the transition metal compound is reversible, and so the atom group is transferred back to the growing polymer chain, which results in formation of a controlled polymerization system. It is accordingly possible to control the formation of the polymer, the molecular weight and the molecular weight distribution.

This reaction regime is described, for example, by J.-S. Wang, et al., J. Am. Chem. Soc, vol. 117, p. 5614-5615 (1995), by Matyjaszewski, Macromolecules, vol. 28, p. 7901-7910 (1995). In addition, patent applications WO 96/30421, WO 97/47661, WO 97/18247, WO 98/40415 and WO 99/10387 disclose variants of the above-elucidated ATRP. In addition, the polymers of the invention can also be obtained via RAFT methods, for example. This method is described in detail, for example, in WO 98/01478 and WO 2004/083169.

The polymerization can be conducted under standard pressure, reduced pressure or elevated pressure. The polymerization temperature is also uncritical. In general, however, it is in the range from -20 to 200°C, preferably 50 to 150°C and more preferably 80 to 130°C.

Preferably, the monomer composition provided in step (x) is diluted by addition of an oil to provide a reaction mixture. The amount of the monomer composition, i.e. the total amount of monomers, relative to the total weight of the reaction mixture is preferably 20 to 90 % by weight, more preferably 40 to 80 % by weight, most preferably 50 to 70 % by weight.

Preferably, the oil used for diluting the monomer composition is an API Group I, II, III, IV or V oil, or a mixture thereof. Preferably, a Group III oil or a mixture thereof is used to dilute the monomer composition.

Preferably, step (y) comprises the addition of a radical initiator.

Suitable radical initiators are, for example, azo initiators, such as azobis-isobutyronitrile (AIBN), 2,2'-azobis(2-methylbutyronitrile) (AMBN) and 1,1-azobiscyclohexanecarbonitrile, and peroxy compounds such as methyl ethyl ketone peroxide, acetylacetone peroxide, dilauryl peroxide, *tert-*butyl peroxy-2-ethylhexanoate, ketone peroxide, *tert*-butyl peroctoate, methyl isobutyl ketone peroxide, cyclohexanone peroxide, dibenzoyl peroxide, *tert*-butyl peroxybenzoate, *tert*-butyl peroxyisopropylcarbonate, 2,5-bis(2-ethylhexanoylperoxy)-2,5-dimethylhexane, *tert*-butyl peroxy-2-ethylhexanoate, *tert*-butyl peroxy-3,5,5-trimethylhexanoate, dicumyl peroxide, 1,1-bis(*tert-*butylperoxy)cyclohexane, 1,1-bis(*tert*-butylperoxy)-3,3,5-trimethylcyclohexane, cumyl hydroperoxide, *tert*-butyl hydroperoxide and bis(4-*tert*-butylcyclohexyl) peroxydicarbonate.

Preferably, the radical initiator is selected from the group consisting of 2,2'-azobis(2-methylbutyronitrile), 2,2-bis(tert-butylperoxy)butane, *tert*-butylperoxy 2-ethylhexanoate, 1,1-di-*tert-*butylperoxy-3,3,5-trimethylcyclohexan, *tert*-butyl peroxybenzoate and *tert*-butylperoxy-3,5,5-trimethylhexanoat. Particularly preferred initiators are *tert*-butylperoxy 2-ethylhexanoate and 2,2-bis(*tert*-butylperoxy)butane.

Preferably, the total amount of radical initiator relative to the total weight of the monomer composition is 0.01 to 5 % by weight, more preferably 0.02 to 1 % by weight, most preferably 0.05 to 0.5 % by weight.

The total amount of radical initiator may be added in a single step or the radical initiator may be added in several steps over the course of the polymerization reaction. Preferably, the radical initiator is added in several steps. For example, a part of the radical initiator may be added to initiate radical polymerization and a second part of the radical initiator may be added 0.5 to 3.5 hours after the initial dosage.

Preferably, step (y) also comprises the addition of a chain transfer agent. Suitable chain transfer agents are especially oil-soluble mercaptans, for example n-dodecyl mercaptan or 2-mercaptoethanol, or else chain transfer agents from the class of the terpenes, for example terpinolene. Particularly preferred is the addition of n-dodecyl mercaptan.

Preferably, the total reaction time of the radical polymerization is 2 to 10 hours, more preferably 3 to 9 hours.

After completion of the radical polymerization, the obtained polymer is preferably further diluted with the above-mentioned oil to the desired viscosity. Preferably, the polymer is diluted to a concentration of 5 to 60 % by weight polymer, more preferably 10 to 50 % by weight, most preferably 20 to 40 % by weight.

### Use of the polymer according to the invention

The invention also relates to the use of the above-mentioned polyalkyl(meth)acrylate polymer as an additive for a lubricant composition for improving the viscosity index and shear-resistance of the lubricant composition. The polymer of the invention can thereby be used as a viscosity index improver that - while providing high VI to a lubricating oil composition - is highly soluble in the lubricating oil composition and allows to maintain excellent properties of the lubricating oil composition such as an excellent shear resistance.

### Lubricating oil compositions

The invention also relates to a composition comprising
(i) one or more base oil; and
(ii) the above-mentioned polyalkyl(meth)acrylate polymer.

The composition may be an additive composition comprising the polymer (ii) according to the invention and one or more base oil (i) as diluent. The additive composition may, for example, be added as a viscosity index improver to lubricants. Typically, the additive composition comprises a relatively high amount of polymer according to the invention.

The composition may also represent a lubricant composition comprising the polymer (ii) according to the invention, one or more base oil (i) and optionally further additives (iii) as discussed below. The lubricant composition may, for example, be used as a transmission fluid or an engine oil. Typically, the lubricant composition comprises a lower amount of polymer according to the invention as compared to the afore-mentioned additive composition.

If the composition is used as an additive composition, the amount of the one or more base oil (component i)) preferably is 40 to 80 % by weight, more preferably 50 to 80 % by weight and the amount of polymer (component ii)) preferably is 20 to 60 % by weight, more preferably 20 to 50 % by weight, based on the total weight of the additive composition, respectively.

If the composition is used as a lubricant composition, the amount of base oil (component i)) is preferably 90 to 99.5 % by weight, more preferably 92 to 99.5 % by weight, and the amount of polymer (component ii)) is preferably 0.5 to 10 % by weight, more preferably 0.5 to 8 % by weight of the polymer, based on the total weight of the composition, respectively.

Preferably, the amounts of (i) and (ii) add up to 100 % by weight.

The polymers of the present invention and the lubricant compositions comprising the polymers according to the invention are favorably used for driving system lubricating oils (such as manual transmission fluids, differential gear oils, automatic transmission fluids and belt-continuously variable transmission fluids, axle fluid formulations, dual clutch transmission fluids, and dedicated hybrid transmission fluids), hydraulic oils (such as hydraulic oils for machinery, power steering oils, shock absorber oils), engine oils (for gasoline engines and for diesel engines) and industrial oil formulations (such as wind turbine).

If the lubricant composition according to the present invention is used as an engine oil, it preferably comprises from 0.5 % by weight to 10 % by weight, more preferably from 0.5 % by weight to 8 % by weight of the polymers according to the invention, based on the total weight of the lubricant composition, leading to a kinematic viscosity at 100 °C being in the range from 4 mm²/s to 10 mm²/s according to ASTM D445.

If the lubricant composition of the present invention is used as an automotive gear oil, it preferably comprises from 0.5 % by weight to 10 % by weight, more preferably from 0.5 % by weight to 8 % by weight of the polymers according to the invention, based on the total weight of the lubricant composition, leading to a kinematic viscosity at 100 °C being in the range from 2 mm²/s to 15 mm²/s according to ASTM D445.

If the lubricant composition of the present invention is used as an automatic transmission oil, it preferably comprises from 0.5 % by weight to 10 % by weight, more preferably from 0.5 % by weight to 8 % by weight of the polymers according to the invention, based on the total weight of the lubricant composition, leading to a kinematic viscosity at 100 °C being in the range from 2 mm²/s to 6 mm²/s according to ASTM D445.

The kinematic viscosity may be measured according to ASTM D445. Preferably, the kinematic viscosity is measured at a temperature of 100 °C and 40 °C.

The shear-resistance is preferably evaluated by measuring the lubricant's properties before and after subjecting the lubricant to shearing according to DIN 51350 - Part 6. Preferably, shearing is measured using a tapered roller bearing according to DIN 51350 - Part 6 for 40 hours with 4,000 rpm at 80 °C.

Due to the presence of the polymer according to the invention, the lubricant compositions have excellent shear-stability while the polymers of the invention maintain their solubility after shear in the lubricant compositions. The compositions according to the invention can thus preferably be used as transmission fluid.

The base oil to be used in the composition preferably comprises an oil of lubricating viscosity. Such oils include natural and synthetic oils, oil derived from hydrocracking, hydrogenation, and hydro-finishing, unrefined, refined, re-refined oils or mixtures thereof.

The base oil may also be defined as specified by the American Petroleum Institute (API) (see April 2008 version of "Appendix E-API Base Oil Interchangeability Guidelines for Passenger Car Motor Oils and Diesel Engine Oils", section 1.3 Sub-heading 1.3. "Base Stock Categories").

The API currently defines five groups of lubricant base stocks (API 1509, Annex E - API Base Oil Interchangeability Guidelines for Passenger Car Motor Oils and Diesel Engine Oils, September 2011). Groups I, II and III are mineral oils which are classified by the amount of saturates and sulfur they contain and by their viscosity indices; Group IV are polyalphaolefins; and Group V are all others, including e.g. ester oils. The Table 2 below illustrates these API classifications.

**Table 2:**

| Group | Saturates | Sulphur content | Viscosity Index (VI) |
|---|---|---|---|
| I | < 90% | > 0.03% | 80-120 |
| II | at least 90% | not more than 0.03% | 80-120 |
| III | at least 90% | not more than 0.03% | at least 120 |
| IV | All polyalphaolefins (PAOs) | | |
| V | All others not included in Groups I, II, III or IV (e.g. ester oils) | | |

The kinematic viscosity at 100°C (KV₁₀₀) of appropriate apolar base oils used to prepare a lubricant composition in accordance with the present invention is preferably in the range of 1 mm²/s to 10 mm²/s, more preferably in the range of 2 mm²/s to 8 mm²/s, according to ASTM D445.

Further base oils which can be used in accordance with the present invention are Group II to III Fischer-Tropsch derived base oils.

Fischer-Tropsch derived base oils are known in the art. By the term "Fischer-Tropsch derived" is meant that a base oil is, or is derived from, a synthesis product of a Fischer-Tropsch process. A Fischer-Tropsch derived base oil may also be referred to as a GTL (Gas-To-Liquids) base oil. Suitable Fischer-Tropsch derived base oils that may be conveniently used as the base oil in the lubricating composition of the present invention are those as for example disclosed in EP 0 776 959, EP 0 668 342, WO 97/21788, WO 00/15736, WO 00/14188, WO 00/14187, WO 00/14183, WO 00/14179, WO 00/08115, WO 99/41332, EP 1 029 029, WO 01/18156, WO 01/57166 and WO 2013/189951.

Especially for transmission oil formulations, base oils of API Group III and mixtures of different Group III oils are used. In a preferred embodiment, the one or more base oil (i) is an API Group III base oil or a mixture of API Group III base oils.

The lubricant compositions according to the present invention are further characterized by their low kinematic viscosity at temperatures of 40°C or less. The KV₄₀ is preferably below 40 mm²/s, more preferably 20 to 40 mm²/s. The KV₄₀ is the kinematic viscosity at 40°C and may be measured according to ASTM D445.

The lubricant composition preferably has a viscosity index of more than 150, more preferably of more than 180. The viscosity index may be measured according to ASTM D2270.

The lubricant composition preferably is a transmission fluid or an engine oil.

The lubricant composition according to the invention may also contain, as component (iii), further additives selected from the group consisting of friction modifiers, dispersants, defoamers, detergents, antioxidants, pour point depressants, antiwear additives, extreme pressure additives, anticorrosion additives, dyes and mixtures thereof.

Appropriate dispersants include poly(isobutylene) derivatives, for example poly(isobutylene)succinimides (PIBSIs), including borated PIBSIs; and ethylene-propylene oligomers having N/O functionalities.

Dispersants (including borated dispersants) are preferably used in an amount of 0 to 5% by weight, based on the total amount of the lubricant composition.

Suitable defoamers are silicone oils, fluorosilicone oils, fluoroalkyl ethers.

The defoaming agent is preferably used in an amount of 0.005 to 0.1% by weight, based on the total amount of the lubricant composition.

The preferred detergents include metal-containing compounds, for example phenoxides; salicylates; thiophosphonates, especially thiopyrophosphonates, thiophosphonates and phosphonates; sulfonates and carbonates. As metal, these compounds may contain especially calcium, magnesium and barium. These compounds may preferably be used in neutral or overbased form.

Detergents are preferably used in an amount of 0.2 to 1% by weight, based on the total amount of the lubricant composition.

The suitable antioxidants include, for example, phenol-based antioxidants and amine-based antioxidants.

Phenol-based antioxidants include, for example, octadecyl-3-(3,5-di-tert-butyl-4-hydroxyphenyl)propionate; 4,4'-methylenebis(2,6-di-tert-butylphenol); 4,4'-bis(2,6-di-t-butylphenol); 4,4'-bis(2-methyl-6-t-butylphenol); 2,2'-methylenebis(4-ethyl-6-t-butylphenol); 2,2'-methylenebis(4-methyl-6-t-butyl phenol); 4,4'-butylidenebis(3-methyl-6-t-butylphenol); 4,4'-isopropylidenebis(2,6-dit-butylphenol); 2,2'-methylenebis(4-methyl-6-nonylphenol); 2,2'-isobutylidenebis(4,6-dimethylphenol); 2,2'-methylenebis(4-methyl-6-cyclohexylphenol); 2,6-di-t-butyl-4-methylphenol; 2,6-di-t-butyl-4-ethyl-phenol; 2,4-dimethyl-6-t-butylphenol; 2,6-di-t-amyl-p-cresol; 2,6-di-t-butyl-4-(N,N'-dimethylaminomethylphenol); 4,4'-thiobis(2-methyl-6-t-butylphenol); 4,4'-thiobis(3-methyl-6-t-butylphenol); 2,2'-thiobis(4-methyl-6-t-butylphenol); bis(3-methyl-4-hydroxy-5-t-butylbenzyl) sulfide; bis(3,5-di-t-butyl-4-hydroxybenzyl)sulfide; n-octyl-3-(4-hydroxy-3,5-di-t-butylphenyl)propionate; n-octadecyl-3-(4-hydroxy-3,5-di-t-butylphenyl)propionate; 2,2'-thio[diethyl-bis-3-(3,5-di-t-butyl-4-hydroxyphenyl)propionate]. Of those, especially preferred are bis-phenol-based antioxidants and ester group containing phenol-based antioxidants.

The amine-based antioxidants include, for example, monoalkyldiphenylamines such as monooctyldiphenylamine, monononyldiphenylamine,; dialkyldiphenylamines such as 4,4' - dibutyldiphenylamine, 4,4'-dipentyldiphe nylamine, 4,4'- dihexyldiphenylamine, 4,4'-diheptyldiphenylamine, 4,4'-dioctyldiphenylamine, 4,4'-dinonyldiphenylamine; polyalkyldiphenylamines such as tetrabutyldiphenylamine, tetrahexyldiphenylamine, tetraoctyldiphenylamine, tetranonyldiphenylamine; naphthylamines, concretely alpha-naphthylamine, phenyl-alpha-naphthylamine and further alkyl-substituted phenyl-alpha-naphthylamines such as butylphenyl-alpha-naphthylamine, pentylphenyl-alpha-naphthylamine, hexylphenyl-alpha-naphthylamine, heptylphenyl-alpha-naphthylamine, octylphenyl-alpha-naphthylamine, nonylphenyl-alpha-naphthylamine. Of those, diphenylamines are preferred to naphthylamines, from the viewpoint of the antioxidation effect thereof.

Suitable antioxidants may further be selected from the group consisting of compounds containing sulfur and phosphorus, for example metal dithiophosphates, for example zinc dithiophosphates (ZnDTPs), "OOS triesters" = reaction products of dithiophosphoric acid with activated double bonds from olefins, cyclopentadiene, norbornadiene, α-pinene, polybutene, acrylic esters, maleic esters (ashless on combustion); organosulfur compounds, for example dialkyl sulfides, diaryl sulfides, polysulfides, modified thiols, thiophene derivatives, xanthates, thioglycols, thioaldehydes, sulfur-containing carboxylic acids; heterocyclic sulfur/nitrogen compounds, especially dialkyldimercaptothiadiazoles, 2-mercaptobenzimidazoles; zinc bis(dialkyldithiocarbamate) and methylene bis(dialkyldithiocarbamate); organophosphorus compounds, for example triaryl and trialkyl phosphites; organocopper compounds and overbased calcium- and magnesium-based phenoxides and salicylates.

Antioxidants are used in an amount of 0 to 15% by weight, preferably 0.1 to 10% by weight, more preferably 0.5 to 5% by weight, based on the total amount of the lubricant composition.

The pour-point depressants include ethylene-vinyl acetate copolymers, chlorinated paraffin-naphthalene condensates, chlorinated paraffin-phenol condensates, polyalkyl(meth)acrylates, polyalkylstyrenes. Preferred are polyalkyl(meth)methacrylates having a mass-average molecular weight of from 5.000 to 200.000 g/mol.

The amount of the pour point depressant is preferably from 0.1 to 5% by weight, based on the total amount of the lubricant composition.

The preferred antiwear and extreme pressure additives include sulfur-containing compounds such as zinc dithiophosphate, zinc di-C₃₋₁₂-alkyldithiophosphates (ZnDTPs), zinc phosphate, zinc dithiocarbamate, molybdenum dithiocarbamate, molybdenum dithiophosphate, disulfides, sulfurized olefins, sulfurized oils and fats, sulfurized esters, thiocarbonates, thiocarbamates, polysulfides; phosphorus-containing compounds such as phosphites, phosphates, for example trialkyl phosphates, triaryl phosphates, e.g. tricresyl phosphate, amine-neutralized mono- and dialkyl phosphates, ethoxylated mono- and dialkyl phosphates,phosphonates, phosphines, amine salts or metal salts of those compounds; sulfur and phosphorus-containing anti-wear agents such as thiophosphites, thiophosphates, thiophosphonates, amine salts or metal salts of those compounds.

The antiwear agent may be present in an amount of 0 to 3% by weight, preferably 0.1 to 1.5% by weight, more preferably 0.5 to 0.9% by weight, based on the total amount of the lubricant composition.

The preferred friction modifiers may include mechanically active compounds, for example molybdenum disulfide, graphite (including fluorinated graphite), poly(trifluorethylene), polyamide, polyimide; compounds which form adsorption layers, for example long-chain carboxylic acids, fatty acid esters, ethers, alcohols, amines, amides, imides; compounds which from layers through tribochemical reactions, for example saturated fatty acids, phosphoric acid and thiophosphoric esters, xanthogenates, sulphurized fatty acids; compounds which form polymer-like layers, for example ethoxylated dicarboxylic acid partial esters, dialkyl phthalates, methacrylates, unsaturated fatty acids, sulphurized olefins and organometallic compounds, for example molybdenum compounds (molybdenum dithiophosphates and molybdenum dithiocarbamates MoDTC) and their combinations with ZnDTPs, copper-containing organic compounds.

Some of the compounds listed above may fulfil multiple functions. ZnDTP, for example, is primarily an antiwear additive and extreme pressure additive, but also has the character of an antioxidant and corrosion inhibitor (here: metal passivator/deactivator).

The above-detailed additives are described in detail, inter alia, in T. Mang, W. Dresel (eds.): "Lubricants and Lubrication", Wiley-VCH, Weinheim 2001; R. M. Mortier, S. T. Orszulik (eds.): "Chemistry and Technology of Lubricants".

Preferably, the total concentration of the one or more additives (iii) is up to 20% by weight, more preferably 0.05% to 15% by weight, more preferably 5% to 15% by weight, based on the total weight of the lubricant composition.

Preferably, the amounts of (i) to (iii) add up to 100 % by weight.

### EXPERIMENTAL PART

The invention is further illustrated in detail hereinafter with reference to examples and comparative examples, without any intention to limit the scope of the present invention.

### Abbreviations

- C₁ AMA: C₁-alkyl methacrylate = methyl methacrylate (MMA)
- C₄ AMA: C₄-alkyl methacrylate = n-butyl methacrylate
- C_{12/14} AMA: C_{12/14}-alkyl methacrylate
- C_{16/18} AMA: C_{16/18}-alkyl methacrylate
- CTA: chain transfer agent (dodecyl mercaptan)
- f_{branch}: degree of branching
- initiator: tert-butylperoxy-2-ethylhexanoat
- KRL: Kegelrollenlager (= tapered roller bearing)
- KV₄₀: kinematic viscosity @40 °C, measured according to ASTM D445
- KV₁₀₀: kinematic viscosity @100 °C, measured according to ASTM D445
- MA-1: macroalcohol of hydrogenated polybutadiene with methacrylate functionality (Mₙ = 2000 g/mol)
- MA-2: macroalcohol of hydrogenated polybutadiene with methacrylate functionality (Mₙ = 4750 g/mol)
- MM-1: macromonomer of hydrogenated polybutadiene with methacrylate functionality (Mₙ = 2000 g/mol)
- MM-2: macromonomer of hydrogenated polybutadiene with methacrylate functionality (Mₙ = 4750 g/mol)
- Mₙ: number-average molecular weight
- M_{w}: weight-average molecular weight
- NB3020: Nexbase ®3020, Group III base oil from Neste with a KV₁₀₀ of 2.2 cSt
- NB3043: Nexbase ®3043, Group III base oil from Neste with a KV₁₀₀ of 4.3 cSt
- OEM: original equipment manufacturer
- PDI: polydispersity index, molecular weight distribution calculated via M_{w}/Mₙ
- PSSI100: permanent shear stability index (calculation based on KV₁₀₀ before and after shear)
- VI: viscosity index, measured according to ASTM D2270

### Test methods

The polymers according to the present invention and comparative examples were characterized with respect to their molecular weight and PDI.

Molecular weights of the polymers were determined by size exclusion chromatography (SEC) using commercially available polymethylmethacrylate (PMMA) standards. The determination is measured by gel permeation chromatography with THF as eluent (flow rate: 1mL/min; injected volume: 100 µL).

The number-average molar mass Mₙ of the macromonomer is determined by size exclusion chromatography using commercially available polybutadiene standards. The determination is measured to DIN 55672-1 by gel permeation chromatography with THF as eluent.

The additive compositions including the polymers according to the present invention and comparative examples were characterized with respect to their viscosity index (VI) according to ASTM D 2270, kinematic viscosity at 40 °C (KV₄₀) and 100 °C (KV₁₀₀) according to ASTM D445.

The shear-stability was investigated via KRL (Kegelrollenlager, engl.: tapered roller bearing) according to DIN51350 - Part 6 for 40 h with 4000 rpm at 80 °C.

To show the shear stability of the additive compositions, the PSSI (Permanent Shear Stability Index) was calculated according to ASTM D 6022-01 (Standard Practice for Calculation of Permanent Shear Stability Index).

### Synthesis of macroalcohols (hydroxylated hydrogenated polybutadiene) MA-1 and MA-2

The macroalcohol was synthesized by anionic polymerization of 1,3-butadiene with butyllithium at 20-45 °C. On attainment of the desired degree of polymerization, the reaction was stopped by adding propylene oxide and lithium was removed by precipitation with methanol. Subsequently, the polymer was hydrogenated under a hydrogen atmosphere in the presence of a noble metal catalyst at up to 140 °C and 200 bar pressure. After the hydrogenation had ended, the noble metal catalyst was removed, and organic solvent was drawn off under reduced pressure. Finally, MA-2 was diluted with NB3020 to a polymer content of 70% by weight. MA-1 was kept 100%.

Table 3 summarizes the characterization data of MA-1 and MA-2.

**Table 3: Characterization data of used macromonomers.**

| | Mₙ [g/mol] | Hydrogenation level [%] | OH functionality [%] |
|---|---|---|---|
| MA-1 | 2,000 | >99 | >98 |
| MA-2 | 4,750 | >99 | >98 |

### Synthesis of macromonomers MM-1 and MM-2

In a 2 L stirred apparatus equipped with saber stirrer, air inlet tube, thermocouple with controller, heating mantle, column having a random packing of 3 mm wire spirals, vapor divider, top thermometer, reflux condenser and substrate cooler, 1000 g of the above-described macroalcohols are dissolved in methyl methacrylate (MMA) by stirring at 60 °C. Added to the solution are 20 ppm of 2,2,6,6-tetramethylpiperidin-1-oxyl radical and 200 ppm of hydroquinone monomethyl ether. After heating to MMA reflux (bottom temperature about 110 °C) while passing air through for stabilization, about 20 mL of MMA are distilled off for azeotropic drying. After cooling to 95 °C, LiOCH₃ is added and the mixture is heated back to reflux. After the reaction time of about 1 hour, the top temperature has fallen to approximately 64 °C because of methanol formation. The methanol/MMA azeotrope formed, is distilled off constantly until a constant top temperature of about 100 °C is established again. At this temperature, the mixture is left to react for a further hour. For further workup, the bulk of MMA is drawn off under reduced pressure. Insoluble catalyst residues are removed by pressure filtration (Seitz T1000 depth filter).

Table 4 summarizes the macroalcohol, MMA and LiOCH₃ amounts used for the synthesis of macromonomers MM-1 and MM-2.

**Table 4: Macroalcohols, MMA and catalyst amounts for the transesterification of the macromonomers.**

| Macromonomer | Macroalcohol | amount MMA [g] | amount LiOCH₃ [g] |
|---|---|---|---|
| MM-1 | MA-1 | 500 | 1.5 |
| MM-2 | MA-2 | 450 | 0.3 |

### Synthesis of polymers according to the present invention

### Process of working example 1

An apparatus with 4-neck flask and precision glass saber is charged with the monomer mixture whose composition is shown in Table 5 and the polymerization oil NB3020 is added, so that the concentration of monomers in oil is 60 wt%. After heating to 105 °C under nitrogen, a 10 wt% solution of tert-butylperoxy-2-ethylhexanoat and dodecyl mercaptan in NB3020 is added within three hours with constant dosing rate. The reaction is maintained at 105 °C and 0.5 and 3.5 hours after the end of the initiator dosing, 0.2% (relative to the total amount of monomers) of 2,2-bis(tert-butylperoxy)butane are added. The reaction mixture is stirred at 105 °C overnight and diluted to a 30 wt% solution of polymer in oil with NB3020 at the next day to obtain the final VII (Example 1).

### Process of working example 2

An apparatus with 4-neck flask and precision glass saber is charged with the monomer mixture as shown in Table 5 including the complete amount of MM-1 and 50 wt% of the remaining monomers and the polymerization oil NB3020 is added, so that the concentration of monomers in oil is 60 wt%. After heating to 100 °C under nitrogen, the remaining monomer mixture and NB3020 including tert-butylperoxy-2-ethylhexanoat and dodecyl mercaptan is added, so that the concentration of monomers in oil at the end of the reaction is 30 wt%, is added within three hours with constant dosing rate. The reaction is maintained at 100 °C and 0.5 and 3.5 hours after the end of the initiator dosing, 0.2% (relative to the total amount of monomers) of 2,2-bis(tert-butylperoxy)butane are added. The reaction mixture is stirred at 100 °C overnight to obtain the final VII with a concentration of 30 wt% (Example 2).

### Process of comparative example 3*

The monomer mixture whose composition is shown in Table 5 is diluted with a 50/50 mixture of Nexbase 3020 and Hydroseal G232 H, so that the concentration of monomers in oil is 60 wt%. An apparatus with 4-neck flask and precision glass saber stirrer is initially charged with 50 wt% of the reaction mixture as prepared above. After heating to 120 °C under nitrogen, the percentage amount of 2,2-bis(tert-butylperoxy)butane initiator named in Table 3 is added to the reaction mixture to start the reaction. The same amount of initiator is added to the other 50% of the reaction mixture, which is added constantly to the flask over three hours at 120 °C. The reaction is maintained at 120 °C and 2 and 4 hours after the reaction mixture dosing, 0.2% (relative to the amount of monomers) of 2,2-bis(tert-butylperoxy)butane are added. The reaction mixture is stirred at 120 °C for additional 2 hours and diluted to a 42.5 wt% solution of polymer in oil with NB3020 to obtain the final VII (comparative example 3*).

### Process of comparative examples 4*,5* and 6*

An apparatus with 4-neck flask and precision glass saber is charged with the monomer mixture whose composition is shown in Table 3 and the polymerization oil NB3020 is added, so that the concentration of monomers in oil is 60 wt%. After heating to 115 °C under nitrogen, a 10 wt% solution of tert-butylperoxy-2-ethylhexanoat and dodecyl mercaptan in NB3020 is added within three hours with constant dosing rate. The reaction is maintained at 115 °C and 0.5 and 3.5 hours after the end of the initiator dosing, 0.2% (relative to the total amount of monomers) of 2,2-bis(tertbutylperoxy)butane are added. The reaction mixture is stirred at 115 °C for additional 2 hours and diluted to a 30 wt% solution of polymer in oil with NB3020 to obtain the final VII.

Table 5 shows the reaction mixtures used to prepare the working and comparative examples. The monomer components will add up to 100%. The amount of initiator and chain transfer agent is given relative to the total amount of monomers.

**Table 5: Reaction mixtures used to prepare working examples and comparative examples.**

| | MM-1 [wt%] | MM-2 [wt%] | C_{12/14} AMA [wt%] | C_{16/18} AMA [wt%] | C₄ AMA [wt%] | C₁ AMA [wt%] | Styrene [wt%] | f_{branch} | Initiator [%] | CTA [%] |
|---|---|---|---|---|---|---|---|---|---|---|
| 1 | 25 | - | 23.5 | - | 10 | 41.3 | 0.2 | 2.0 | 0.4 | 1.0 |
| 2 | 18 | - | 29.1 | - | 10.3 | 42.4 | 0.2 | 1.6 | 0.3 | 0.1 |
| 3* | 23.3 | - | 0.4 | - | 23.5 | 0.2 | 52.6 | 1.7 | 0.4 | - |
| 4* | 25.0 | - | - | 5.0 | 55.0 | 14.8 | 0.2 | 2.2 | 0.18 | 0.1 |
| 5* | 25.0 | 5.0 | 3.7 | - | 33.9 | 15.9 | 16.5 | 2.1 | 0.4 | 0.4 |
| 6* | 26.0 | 5.0 | 0.2 | - | 10.0 | 0.2 | 58.6 | 1.9 | 0.4 | 0.8 |

| | | | | | | | | | | |
|---|---|---|---|---|---|---|---|---|---|---|
| *) comparative examples | | | | | | | | | | |

Two working examples were prepared that are in accordance with the invention (examples 1 and 2). In addition, four comparative examples (examples 3*, 4*, 5* and 6*) were prepared. Comparative examples 3* and 6* have a low amount of C₁ AMA and C₄ AMA and especially, a very low amount of C₁ AMA.

Comparative examples 4* and 5* have a high amount of C₁ AMA and C₄ AMA, however the ratio of C₁ AMA and C₄ AMA is not in accordance with the present invention, namely, an excess of C₄ AMA compared to C₁ AMA is used.

### Evaluation of VI improver candidates

To demonstrate the improved effect in shear-resistance of the polymers synthesized with a high amount of C₁ AMA according to the invention, corresponding additive compositions of polymers in base oil were prepared and the corresponding permanent shear-losses were determined. The results are summarized in Table 6 below.

The permanent shear-loss (PSSI100) was determined with the KRL according to DIN51350 - Part 6 for 40 h with 4000 rpm at 80 °C. The solubility after shear was determined via visual inspection.

The characteristic weight-average molecular weights (M_{w}) and the polydispersity indices (PDI) of the polymers were obtained via SEC measurements.

All polymers were dissolved in NB3043 and the treat rate adjusted so that the KV₁₀₀ of the formulation was 5.5 cSt. Additionally, 0.6 % of DI package (RC9300) were added for KRL protection purposes only. The kinematic viscosity data, PSSI100 and visual appearance of the formulations are given in Table 6.

As shown in Table 6, the polymers in accordance with the present invention exhibit a significantly reduced PSSI100 compared to the comparative examples, while keeping the high VI level of the comparative examples. This result is surprising because it is usually expected that with such low shear stability values (PSSI100), the VI would not be so high. Surprisingly, it has been found that a high C₁ AMA and C₄ AMA amount in the polymer of 50% by weight or more in combination with a weight ratio of C₁ AMA versus C₄ AMA of 5:1 to 3:1 leads to a more shear-resistant polymer having still high VI.

**Table 6: Viscometric performance, PSSI100 and molecular weight of working and comparative examples.**

| | before shear in NB3043 | | | | | | | |
|---|---|---|---|---|---|---|---|---|
| | Treat rate | KV₁₀₀ | KV₄₀ | VI | PSSI100 | M_{w} | PDI | Visual appearance |
| | [wt%] | [mm²/s] | [mm²/s] | | [%] | [g/mol] | | |
| 1 | 20.0 | 5.526 | 37.77 | 185 | 5.4 | 66400 | 2.73 | clear |
| 2 | 18.9 | 5.515 | 22.99 | 192 | 11.5 | 200000 | 4.48 | clear |
| 3* | 8.9 | 5.478 | 22.53 | 195 | 18.8 | 161000 | 3.15 | clear |
| 4* | 12.1 | 5.515 | 22.43 | 200 | 30.1 | 300000 | 4.53 | clear |
| 5* | 15.2 | 5.501 | 23.41 | 186 | 21.6 | 125000 | 3.67 | clear |
| 6* | 14.0 | 5.502 | 23.48 | 185 | 22.4 | 73700 | 2.92 | clear |

| | | | | | | | | |
|---|---|---|---|---|---|---|---|---|
| *) comparative examples | | | | | | | | |

## Claims

1. A polyalkyl(meth)acrylate polymer, obtainable by polymerizing a monomer composition comprising:
a) 15 to 35 % by weight of one or more esters of (meth)acrylic acid and one hydroxylated hydrogenated polybutadiene having a number-average molecular weight of 1,800 to 2,200 g/mol, based on the total weight of the monomer composition;
b) 50 to 60 % by weight of methyl(meth)acrylate and butyl(meth)acrylate, based on the total weight of the monomer composition; and
c) 5 to 35 % by weight of one or more linear or branched C₇-C₃₀ alkyl(meth)acrylates, based on the total weight of the monomer composition;
wherein the weight ratio of methyl(meth)acrylate to butyl(meth)acrylate is 5:1 to 3:1, and
wherein the polyalkyl(meth)acrylate polymer has a weight-average molecular weight (M_{w}) of 50,000 to 250,000 g/mol.

2. The polymer according to claim 1, wherein the monomer composition further comprises one or more monomer d) selected from the list consisting of (meth)acrylates of ether alcohols, aminoalkyl (meth)acrylates, aminoalkyl (meth)acrylamides, vinyl monomers containing aromatic groups, preferably styrene.

3. The polymer according to claim 2, wherein the monomer composition comprises 0.1% to 5% by weight of monomer d), preferably 0.1% to 2% by weight of monomer d), based on the total weight of the monomer composition.

4. The polymer according to any one of claims 1 to 3, wherein the monomer c) is one or more linear or branched C₇-C₁₅ alkyl(meth)acrylate, preferably linear or branched C₁₂-C₁₄ alkyl(meth)acrylate.

5. The polymer according to any one of claims 1 to 4, wherein the monomer composition comprises 15 to 30 % by weight of monomer a), based on the total weight of the monomer composition.

6. The polymer according to any one of claims 1 to 5, wherein the monomer composition comprises 50 to 55 % by weight of monomer b), based on the total weight of the monomer composition.

7. The polymer according to any one of claims 1 to 6, wherein the monomer composition comprises 15 to 35 % by weight of monomer c), based on the total weight of the monomer composition.

8. The polymer according to any one of claims 1 to 7, wherein the weight contents of monomers a), b), c) and d) of the monomer composition sum up to 100 % by weight, based on the total weight of the monomer composition.

9. The polymer according to any one of claims 1 to 8, wherein the monomer composition comprises
a) 15 to 30 % by weight of one or more esters of (meth)acrylic acid and one hydroxylated hydrogenated polybutadiene having a number-average molecular weight of 1,800 to 2,200 g/mol, based on the total weight of the monomer composition;
b) 50 to 55 % by weight of methyl(meth)acrylate and butyl(meth)acrylate, based on the total weight of the monomer composition;
c) 20 to 30 % by weight of one or more linear C₁₂-C₁₄ alkyl(meth)acrylates, based on the total weight of the monomer composition; and
d) 0.1% to 2% by weight of styrene, based on the total weight of the monomer composition; wherein the weight contents of monomers a), b), c) and d) of the monomer composition sum up to 100 % by weight, based on the total weight of the monomer composition.

10. A method for manufacturing a polyalkyl(meth)acrylate polymer, the method comprising the steps of:
(x) providing a monomer composition according to any one of claims 1 to 9; and
(y) initiating radical polymerization in the monomer composition.

11. Use of the polyalkyl(meth)acrylate polymer according to any one of claims 1 to 9 as an additive for a lubricant composition for improving the viscosity index and the shear-resistance of the lubricant composition.

12. A composition comprising:
(i) one or more base oil; and
(ii) a polyalkyl(meth)acrylate polymer according to any one of claims 1 to 9.

13. The composition according to claim 12, wherein the one or more base oil is an API Group III base oil or a mixture of API Group III base oils.

14. The composition according to claim 12 or 13, wherein the composition is a lubricant composition comprising 90 to 99.5 % by weight, preferably 92 to 99.5 % by weight of one or more base oil (i), and 0.5 to 10 % by weight, preferably 0.5 to 8 % by weight of the polyalkyl(meth)acrylate polymer (ii), based on the total weight of the composition.

## Patentansprüche

1. Polyalkyl(meth)acrylat-Polymer, das erhältlich ist durch Polymerisieren einer Monomerzusammensetzung, umfassend:
a) 15 bis 35 Gew.-% eines oder mehrerer Ester von (Meth)acrylsäure und einem hydroxylierten hydrierten Polybutadien mit einem zahlenmittleren Molekulargewicht von 1800 bis 2200 g/mol, bezogen auf das Gesamtgewicht der Monomerzusammensetzung;
b) 50 bis 60 Gew.-% Methyl (meth)acrylat und Butyl(meth)acrylat, bezogen auf das Gesamtgewicht der Monomerzusammensetzung; und
c) 5 bis 35 Gew.-% eines oder mehrerer linearer oder verzweigter C₇-C₃₀-Alkyl(meth)acrylate, bezogen auf das Gesamtgewicht der Monomerzusammensetzung;
wobei das Gewichtsverhältnis von Methyl(meth)-acrylat zu Butyl(meth)acrylat 5:1 bis 3:1 beträgt und
wobei das Polyalkyl(meth)acrylat-Polymer ein gewichtsmittleres Molekulargewicht (M_{w}) von 50.000 bis 250.000 g/mol aufweist.

2. Polymer nach Anspruch 1, wobei die Monomerzusammensetzung ferner ein oder mehrere Monomere d) aus der Liste bestehend aus (Meth)acrylaten von Etheralkoholen, Aminoalkyl(meth)acrylaten, Aminoalkyl(meth)acrylamiden und Vinylmonomeren mit aromatischen Gruppen, vorzugsweise Styrol, umfasst.

3. Polymer nach Anspruch 2, wobei die Monomerzusammensetzung 0,1 bis 5 Gew.-% Monomer d), vorzugsweise 0,1 bis 2 Gew.-% Monomer d), bezogen auf das Gesamtgewicht der Monomerzusammensetzung, umfasst.

4. Polymer nach einem der Ansprüche 1 bis 3, wobei es sich bei Monomer c) um ein oder mehrere lineare oder verzweigte C₇-C₁₅-Alkyl (meth) acrylate, vorzugsweise lineare oder verzweigte C₁₂-C₁₄-Alkyl-(meth)acrylate, handelt.

5. Polymer nach einem der Ansprüche 1 bis 4, wobei die Monomerzusammensetzung 15 bis 30 Gew.-% Monomer a), bezogen auf das Gesamtgewicht der Monomerzusammensetzung, umfasst.

6. Polymer nach einem der Ansprüche 1 bis 5, wobei die Monomerzusammensetzung 50 bis 55 Gew.-% Monomer b), bezogen auf das Gesamtgewicht der Monomerzusammensetzung, umfasst.

7. Polymer nach einem der Ansprüche 1 bis 6, wobei die Monomerzusammensetzung 15 bis 35 Gew.-% Monomer c), bezogen auf das Gesamtgewicht der Monomerzusammensetzung, umfasst.

8. Polymer nach einem der Ansprüche 1 bis 7, wobei sich die Gewichtsgehalte der Monomere a), b), c) und d) der Monomerzusammensetzung zu 100 Gew.-%, bezogen auf das Gesamtgewicht der Monomerzusammensetzung, summieren.

9. Polymer nach einem der Ansprüche 1 bis 8, wobei die Monomerzusammensetzung
a) 15 bis 30 Gew.-% eines oder mehrerer Ester von (Meth)acrylsäure und einem hydroxylierten hydrierten Polybutadien mit einem zahlenmittleren Molekulargewicht von 1800 bis 2200 g/mol, bezogen auf das Gesamtgewicht der Monomerzusammensetzung;
b) 50 bis 55 Gew.-% Methyl (meth)acrylat und Butyl(meth)acrylat, bezogen auf das Gesamtgewicht der Monomerzusammensetzung;
c) 20 bis 30 Gew.-% eines oder mehrerer linearer C₁₂-C₁₄-Alkyl (meth) acrylate, bezogen auf das Gesamtgewicht der Monomerzusammensetzung; und
d) 0,1 bis 2 Gew.-% Styrol, bezogen auf das Gesamtgewicht der Monomerzusammensetzung;
umfasst, wobei sich die Gewichtsgehalte der Monomere a), b), c) und d) der Monomerzusammensetzung zu 100 Gew.-%, bezogen auf das Gesamtgewicht der Monomerzusammensetzung, summieren.

10. Verfahren zur Herstellung eines Polyalkyl(meth)-acrylat-Polymers, wobei das Verfahren folgende Schritte umfasst:
(x) Bereitstellen einer Monomerzusammensetzung nach einem der Ansprüche 1 bis 9 und
(y) Initiieren einer radikalischen Polymerisation in der Monomerzusammensetzung.

11. Verwendung des Polyalkyl(meth)acrylat-Polymers nach einem der Ansprüche 1 bis 9 als Additiv für eine Schmierstoffzusammensetzung zur Verbesserung des Viskositätsindex und der Scherbeständigkeit der Schmierstoffzusammensetzung.

12. Zusammensetzung, umfassend:
(i) ein oder mehrere Grundöle und
(ii) ein Polyalkyl(meth)acrylat-Polymer nach einem der Ansprüche 1 bis 9.

13. Zusammensetzung nach Anspruch 12, wobei es sich bei dem einen Grundöl bzw. den mehreren Grundölen um ein API-Gruppe-III-Grundöl oder eine Mischung von API-Gruppe-III-Grundölen handelt.

14. Zusammensetzung nach Anspruch 12 oder 13, wobei es sich bei der Zusammensetzung um eine Schmierstoffzusammensetzung handelt, die 90 bis 99,5 Gew.-%, vorzugsweise 92 bis 99,5 Gew.-%, eines oder mehrerer Grundöle (i) und 0,5 bis 10 Gew.-%, vorzugsweise 0,5 bis 8 Gew.-%, des Polyalkyl-(meth)acrylat-Polymers (ii), bezogen auf das Gesamtgewicht der Zusammensetzung, umfasst.

## Revendications

1. Polymère poly((méth)acrylate d'alkyle), pouvant être obtenu par polymérisation d'une composition de monomères comprenant :
a) 15 à 35 % en poids d'un ou plusieurs esters d'acide (méth)acrylique et d'un polybutadiène hydrogéné hydroxylé ayant une masse moléculaire moyenne en nombre de 1 800 à 2 200 g/mol, par rapport au poids total de la composition de monomères ;
b) 50 à 60 % en poids de (méth)acrylate de méthyle et de (méth)acrylate de butyle, par rapport au poids total de la composition de monomères ; et
c) 5 à 35 % en poids d'un ou plusieurs (méth)acrylates d'alkyle en C₇-C₃₀ linéaire ou ramifié, par rapport au poids total de la composition de monomères ;
le rapport pondéral du (méth)acrylate de méthyle au (méth)acrylate de butyle étant de 5:1 à 3:1 et
le polymère poly((méth)acrylate d'alkyle) ayant une masse moléculaire moyenne en poids (M_{w}) de 50 000 à 250 000 g/mol.

2. Polymère selon la revendication 1, la composition de monomères comprenant en outre un ou plusieurs monomères d) choisis dans la liste constituée par des (méth)acrylates d'alcools d'éthers, des (méth)acrylates d'aminoalkyle, des aminoalkyl(méth)acrylamides, des monomères vinyliques contenant des groupes aromatiques, de préférence le styrène.

3. Polymère selon la revendication 2, la composition de monomères comprenant 0,1 % à 5 % en poids de monomère d), de préférence 0,1 % à 2 % en poids de monomère d), par rapport au poids total de la composition de monomères.

4. Polymère selon l'une quelconque des revendications 1 à 3, le monomère c) étant un ou plusieurs (méth)acrylates d'alkyle en C₇-C₁₅ linéaire ou ramifié, de préférence un (méth) acrylate d'alkyle en C₁₂-C₁₄ linéaire ou ramifié.

5. Polymère selon l'une quelconque des revendications 1 à 4, la composition de monomères comprenant 15 à 30 % en poids de monomère a), par rapport au poids total de la composition de monomères.

6. Polymère selon l'une quelconque des revendications 1 à 5, la composition de monomères comprenant 50 à 55 % en poids de monomère b), par rapport au poids total de la composition de monomères.

7. Polymère selon l'une quelconque des revendications 1 à 6, la composition de monomères comprenant 15 à 35 % en poids de monomère c), par rapport au poids total de la composition de monomères.

8. Polymère selon l'une quelconque des revendications 1 à 7, les teneurs en poids des monomères a), b), c) et d) de la composition de monomères totalisant 100 % en poids, par rapport au poids total de la composition de monomères.

9. Polymère selon l'une quelconque des revendications 1 à 8, la composition de monomères comprenant
a) 15 à 30 % en poids d'un ou plusieurs esters d'acide (méth)acrylique et d'un polybutadiène hydrogéné hydroxylé ayant une masse moléculaire moyenne en nombre de 1 800 à 2 200 g/mol, par rapport au poids total de la composition de monomères ;
b) 50 à 55 % en poids de (méth)acrylate de méthyle et de (méth)acrylate de butyle, par rapport au poids total de la composition de monomères ;
c) 20 à 30 % en poids d'un ou plusieurs (méth) acrylates d'alkyle en C₁₂-C₁₄ linéaire, par rapport au poids total de la composition de monomères ; et
d) 0,1 % à 2 % en poids de styrène, par rapport au poids total de la composition de monomères ;
les teneurs en poids des monomères a), b), c) et d) de la composition de monomères totalisant 100 % en poids, par rapport au poids total de la composition de monomères.

10. Procédé pour la fabrication d'un polymère poly((méth)acrylate d'alkyle), le procédé comprenant les étapes consistant à :
(x) fournir une composition de monomères selon l'une quelconque des revendications 1 à 9 ; et
(y) amorcer une polymérisation radicalaire dans la composition de monomères.

11. Utilisation du polymère poly((méth)acrylate d'alkyle) selon l'une quelconque des revendications 1 à 9 en tant qu'additif pour une composition de lubrifiant pour l'amélioration de l'indice de viscosité et de la résistance au cisaillement de la composition de lubrifiant.

12. Composition comprenant :
(i) une ou plusieurs huiles de base ; et
(ii) un polymère poly((méth)acrylate d'alkyle) selon l'une quelconque des revendications 1 à 9.

13. Composition selon la revendication 12, la ou les huiles de base étant une huile de base du groupe API III ou un mélange d'huiles de base du groupe API III.

14. Composition selon la revendication 12 ou 13, la composition étant une composition de lubrifiant comprenant 90 à 99,5 % en poids, de préférence 92 à 99,5 % en poids d'une ou plusieurs huiles de base (i) et 0,5 à 10 % en poids, de préférence 0,5 à 8 % en poids du polymère poly((méth)acrylate d'alkyle) (ii), par rapport au poids total de la composition.
